# DEMANDE DE BREVET EUROPEEN

(11) **EP 2 551 524 A1**
(43) Date de publication de la demande: **30.01.2013**
(21) Numéro de dépôt: 12178343.5
(22) Date de dépôt: 27.07.2012
(51) Int. Cl.: F04B 49/00, F04B 49/08, B60K 25/00, F16H 61/40, F16H 61/4148, F01P 7/04

(54) **Circuit de commande hydraulique**

(30) Priorité: 29.07.2011 FR 1156989
(71) Demandeur: Poclain Hydraulics Industrie, 60410 Verberie (FR)
(72) Inventeur: Roger Fabien, 60410 Verberie (FR); Heren Jean, 60280 Margny les Compiegne (FR)
(74) Mandataire: Regimbeau

(57) **Abrégé**

La présente invention concerne un circuit hydraulique comprenant :
- une pompe (1) à cylindrée variable,
- une pompe de gavage (2),
- une commande de pompe (5) pilotant la cylindrée de ladite pompe (1) à cylindrée variable, alimentée par la pompe de gavage (2) via des moyens de contrôle de pression (11, 12, 21, 25),

ladite commande de pompe (5) comprenant un vérin (5) double effet comprenant une première chambre (51) et une seconde (52) chambre, dans lequel
- la première chambre (51) est reliée à ladite pompe de gavage (2) via une première ligne de tarage comprenant des moyens réducteurs de pression (11, 12, 13),
- la seconde chambre (52) est reliée à ladite pompe de gavage (2) via une seconde ligne de tarage comprenant un réducteur de pression (21) proportionnel,

de sorte que le pilotage du réducteur de pression (21) proportionnel pilote la cylindrée de la pompe (1) à cylindrée variable.

## Description

### DOMAINE TECHNIQUE GENERAL

La présente invention concerne le domaine des moyens de pilotage de pompes hydrauliques à cylindrée variable.

Elle trouve une application particulière pour le pilotage des circuits d'actionnement d'un ventilateur de circuit de refroidissement, par exemple dans le cas du refroidissement d'un moteur thermique de véhicule.

### ETAT DE L'ART

Les pompes hydrauliques à cylindrée variable sont largement utilisées dans les circuits d'alimentation hydraulique.

Ces pompes hydrauliques à cylindrée variable comprennent typiquement un plateau à inclinaison variable, cette inclinaison du plateau faisant varier la cylindrée de la pompe.

L'inclinaison du plateau est communément pilotée par un vérin simple effet ; ce vérin comprend un ressort de tarage, et est piloté en pression directement par prélèvement de la pression délivrée par la pompe hydraulique via un limiteur de pression.

Le document US 20100132352 présente un tel circuit hydraulique comprenant une pompe hydraulique à cylindrée variable dont le débit est piloté comme indiqué précédemment.

Un tel circuit de pilotage de la cylindrée de la pompe est un circuit ouvert ; du fluide, typiquement de l'huile, est prélevé du circuit hydraulique et acheminé soit vers la commande du vérin, soit rejetée au travers d'une fuite. Du fluide est donc prélevé du débit fourni par la pompe hydraulique en permanence, ce qui engendre des pertes.

En outre, la pompe hydraulique est entrainée par un moteur thermique, et un circuit de pilotage implique que la pompe hydraulique est entrainée en rotation dès le démarrage du moteur thermique d'entrainement, ce qui est une gêne pour son démarrage.

Enfin, le pilotage de la cylindrée de la pompe hydraulique en cas de défaillance de moyens de commande, par exemple en cas de défaillance de composants électriques du système pose une problématique de sécurité.

### PRESENTATION DE L'INVENTION

La présente invention vise à proposer un circuit de pilotage de la cylindrée d'une pompe hydraulique ne présentant pas de tels inconvénients.

A cet effet, on propose un circuit hydraulique comprenant :
- une pompe à cylindrée variable, alimentant en fluide ledit circuit,
- une pompe de gavage,
- une commande de pompe pilotant la cylindrée de ladite pompe à cylindrée variable, alimentée par la pompe de gavage via des moyens de contrôle de pression,
ledit circuit étant **caractérisé en ce que** ladite commande de pompe comprend un vérin double effet comprenant une première et une seconde chambre, dans lequel
- la première chambre est reliée à ladite pompe de gavage via une première ligne de tarage comprenant des moyens réducteurs de pression,
- la seconde chambre est reliée à ladite pompe de gavage via une seconde ligne de tarage comprenant un réducteur de pression proportionnel,
de sorte que le pilotage du réducteur de pression proportionnel pilote la cylindrée de la pompe à cylindrée variable.

En variante, lesdits moyens réducteurs de pression comprennent deux réducteurs de débit montés en série, définissant une pression intermédiaire qui alimente ladite première chambre.

Selon une autre variante, ledit réducteur de pression proportionnel est muni d'une commande de tarage électrique.

En variante, un réducteur de débit est disposé entre le réducteur de pression proportionnel et la seconde chambre du vérin.

Ce circuit trouve une application particulière dans un système dans lequel ladite pompe à cylindrée variable alimente un moteur pour l'entrainement d'un ventilateur d'un circuit de refroidissement.

En variante, ladite pompe à cylindrée variable est une pompe à pistons axiaux, et la cylindrée variable est pilotée par l'inclinaison d'un plateau came.

En variante, ledit circuit est muni d'une soupape tarée prélevant la pression dudit circuit, et adaptée pour réaliser une fuite de pression dudit circuit lorsque la pression est supérieure ou égale à une valeur définie.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
La figure 1 présente un circuit de pilotage d'une pompe à cylindrée variable selon un aspect de l'invention.
Les figures 2 et 3 présentent des variantes du circuit présenté sur la figure 1.
La figure 4 présente un exemple de circuit hydraulique mettant en oeuvre le circuit présenté sur les figures précédentes.
La figure 5 illustre une variante du circuit présenté sur la figure 4.

Dans l'ensemble des figures, les éléments communs sont repérés par les mêmes références numériques.

### DESCRIPTION DETAILLEE

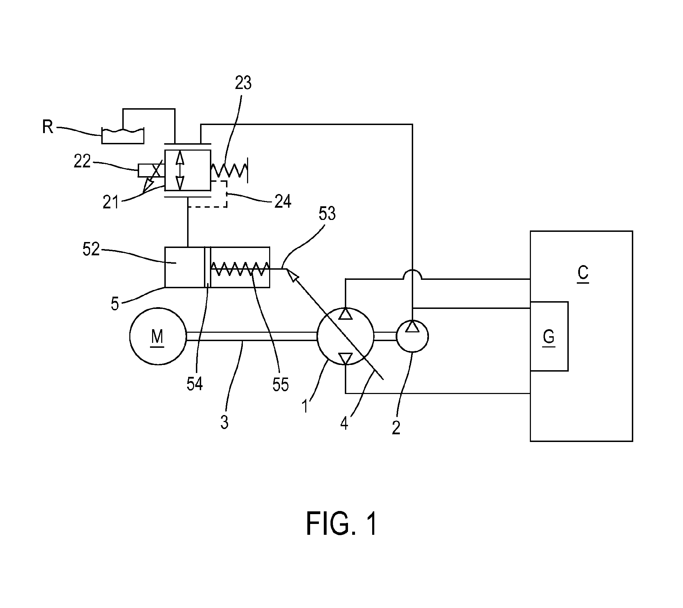

La figure 1 illustre un mode de réalisation de circuit hydraulique selon l'invention.

Dans le circuit hydraulique tel que représenté, une pompe hydraulique 1 et une pompe de gavage 2 sont entrainées par un arbre d'entrainement commun 3 qui est typiquement entraîné en rotation par un moteur thermique M.

La pompe hydraulique 1 alimente en fluide hydraulique, par exemple de l'huile, un circuit hydraulique C, et a une cylindrée variable, typiquement sous la forme d'un plateau 4 à inclinaison variable dont l'inclinaison est pilotée par une commande de pompe 5, typiquement un vérin 5.

La pompe hydraulique 1 est typiquement une pompe à pistons axiaux dont la cylindrée variable est pilotée par l'inclinaison d'un plateau came. La pompe hydraulique 1 est adaptée pour faire circuler le fluide hydraulique dans le circuit hydraulique C selon deux sens de circulation, en fonction de l'inclinaison du plateau came de la pompe 1, la pompe hydraulique 1 étant toujours entrainée dans le même sens. On définit ainsi deux plages de valeurs pour l'inclinaison du plateau 4 de la pompe 1 ; une première plage de valeurs correspondant à un premier sens de circulation du fluide dans le circuit hydraulique C, et une seconde plage de valeurs correspondant à un second sens de circulation du fluide dans le circuit hydraulique C. La cylindré nulle est atteinte pour une inclinaison du plateau 4 de la pompe 1 à la transition entre la première et la seconde plage de valeurs.

La pompe de gavage 2 alimente un circuit de gavage G du circuit hydraulique C ainsi que la commande de pompe 5. La pompe de gavage 2 prélève par exemple le fluide hydraulique nécessaire dans un réservoir non représenté sur cette figure.

Dans ce mode de réalisation, la commande de pompe 5 est un vérin comprenant une chambre 52, une tige 53 qui pilote l'inclinaison du plateau 4 de la pompe 1, et une cloison interne 54 reliée à un moyen de rappel 55 élastique tel qu'un ressort.

La chambre 52 du vérin 5 est alimentée par la pompe de gavage 2, via des moyens de contrôle de pression, typiquement un réducteur de pression proportionnel 21, muni d'une commande 22.

La commande 22 est typiquement pilotée au moyen d'une unité de pilotage électronique.

Le réducteur de pression proportionnel 21 achemine le fluide en provenance de la pompe de gavage 2 vers la seconde chambre 52 du vérin 5 et/ou vers un réservoir R qui est sensiblement à pression ambiante ou atmosphérique, en fonction de l'action exercée par la commande 22 sur ce réducteur de pression proportionnel 21.

Un moyen de rappel élastique 23 et une ligne de recopie 24 s'opposent à l'action de la commande 22 sur le réducteur de pression proportionnel 21, de sorte que lorsque la commande 22 applique un effort nul sur le réducteur de pression proportionnel 21, le réducteur de pression proportionnel 21 ajuste la pression de la chambre 52 de sorte qu'elle soit égale à la pression du réservoir R.

Dans ce mode de réalisation particulier, la pompe 1 est par défaut en pleine cylindrée, et l'utilisateur peut utiliser la commande 22 afin d'acheminer du fluide dans la chambre 52 du vérin 5, et ainsi modifier la cylindrée de la pompe 1 en la réduisant à 0, et en continuant d'augmenter la pression dans la chambre 52 du vérin 5 dans ce sens, jusqu'à la pleine cylindrée inverse.

En cas de panne de la commande 22, la pompe 1 est ainsi en pleine cylindrée ce qui assure le fonctionnement du circuit hydraulique C alimenté par la pompe 1.

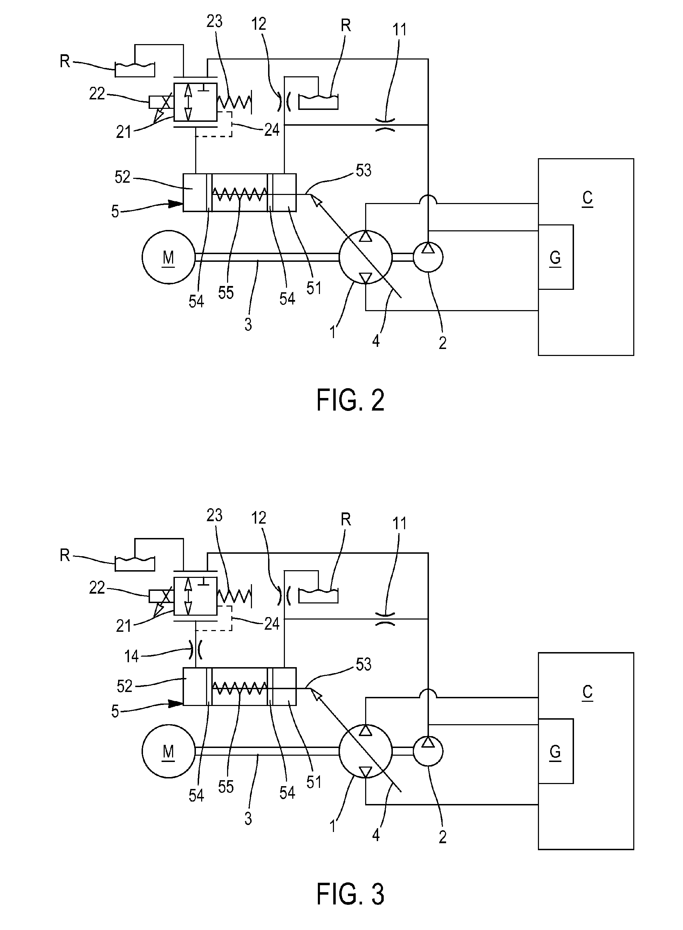

La figure 2 présente un circuit hydraulique pour le pilotage d'une pompe à cylindrée variable selon une variante de l'invention.

Dans ce mode de réalisation, la commande de pompe 5 est un vérin double effet, comprenant une première chambre 51 et une seconde chambre 52, une tige 53 qui pilote l'inclinaison du plateau 4 de la pompe 1, et deux cloisons internes 54 reliées par un moyen de rappel 55 élastique tel qu'un ressort, lesdites parois internes étant disposées entre les deux chambres 51 et 52.

Les deux chambres 51 et 52 du vérin 5 sont alimentées par la pompe de gavage 2, via des moyens de contrôle de pression et de débit.

La première chambre 51 du vérin 5 est alimentée en pression par la pompe de gavage 2 via des moyens réducteurs de pression, comprenant deux restrictions 11 et 12 montées en série et réalisant des pertes de charge singulières. Les restrictions 11 et 12 sont typiquement des limiteurs de débit avec évacuation de l'excédent de débit, aussi appelés gicleurs. En variante, les restrictions 11 et 12 peuvent également être remplacées par un réducteur de pression comme ce sera représenté ultérieurement.

La première restriction 11 prélève du fluide distribué par la pompe de gavage 2, tandis que la seconde restriction 12 débouche sur un réservoir R à pression ambiante, typiquement à pression atmosphérique.

Les restrictions 11 et 12 montées en série définissent une pression intermédiaire dans la portion de circuit hydraulique entre ces deux restrictions 11 et 12, qui est acheminée vers la première chambre 51 du vérin 5. La pression intermédiaire définir par les deux restrictions 11 et 12 a une valeur comprise entre la pression délivrée par la pompe de gavage 2 et la pression du réservoir R.

La seconde chambre 52 du vérin 5 est alimentée en pression par la pompe de gavage 2 via un réducteur de pression proportionnel 21, muni d'une commande 22, comme décrit précédemment.

Les pressions dans les deux chambres 51 et 52 du vérin 5 s'opposent, et la position du vérin 5 résultant de ces pressions définit l'inclinaison du plateau 4 de la pompe hydraulique 1, et donc sa cylindrée. Lorsque les pressions au sein des deux chambres 51 et 52 sont égales, alors le vérin 5 est en position d'équilibre, et le plateau 4 de la pompe hydraulique 1 définit une cylindrée nulle.

En augmentant la pression dans l'une ou l'autre des chambres 51 et 52 du vérin 5, on déplace le vérin 5 qui entraine le plateau 4 de la pompe hydraulique 1 dans un sens de rotation donné du plateau came de la pompe 1, qui correspond soit à un premier sens de débit, soit à un deuxième sens de débit dans la boucle fermée.

Par exemple, on considère une situation initiale dans laquelle les chambres 51 et 52 du vérin 5 sont toutes les deux à une pression P0. Par exemple à la mise en route du système, P0 peut être égale à zéro. A la mise en route de la pompe de gavage 2, la pression dans 51 va augmenter.

En augmentant la pression au sein de la première chambre 51 du vérin 5, par exemple jusqu'à une valeur P1 telle que P1 > P0, on augmente la cylindrée de la pompe hydraulique 1 dans un premier sens de débit de la boucle fermée du circuit hydraulique C correspondant à la première plage de valeurs de l'inclinaison du plateau 4 de la pompe hydraulique 1. Ensuite, en pilotant la commande 22 du réducteur de pression proportionnel 21, on fait varier la pression au sein de la chambre 52 pour atteindre une valeur P2 telle que P2 > P1. La cylindrée de la pompe hydraulique va alors décroître, jusqu'à ce qu'elle ait une cylindrée nulle lorsque les deux chambres 51 et 52 sont à la pression P1, puis au fur et à mesure que la pression continue d'augmenter dans la chambre 52 pour atteindre la valeur P2, l'inclinaison du plateau 4 de la pompe hydraulique 1 atteint la seconde plage de valeurs qui correspond au deuxième sens de circulation du fluide dans le circuit hydraulique C, dont le débit augmente au fur et à mesure que la pression dans la chambre 52 augmente. La pompe hydraulique 1 alimente alors le circuit hydraulique C dans le second sens de débit, inverse du premier sens de débit mentionné précédemment.

La cylindrée de la pompe 1 est donc pilotée grâce à une commande de pompe 5 prenant ici la forme d'un vérin 5 double effet, alimenté en pression par la pompe de gavage 2 au travers de moyens de contrôle de pression. Ces moyens de contrôle de pression permettent donc à un utilisateur de réguler la cylindrée de la pompe 1 à cylindrée variable.

Lorsque l'arbre d'entrainement 3 n'est pas entrainé en rotation par le moteur thermique M, et que le système est donc à l'arrêt, la pompe hydraulique 1 et la pompe de gavage 2 n'alimentent pas le circuit C et le circuit de gavage G en fluide.

La pression dans la première chambre 51 et la seconde chambre 52 du vérin 5 est alors égale à la pression ambiante ou atmosphérique, la commande 22 appliquée au réducteur de pression proportionnel 21 n'ayant alors pas d'effet.

Le vérin 5 est ainsi en position d'équilibre, correspondant à une inclinaison du plateau 4 pour laquelle la cylindrée de la pompe hydraulique 1 est nulle.

Lors du démarrage du système, le moteur thermique M est mis en route, afin d'entrainer en rotation l'arbre d'entrainement 3.

L'arbre d'entrainement 3 entraine ensuite en rotation la pompe hydraulique 1 et la pompe de gavage 2.

La pompe de gavage 2 délivre ensuite une pression de gavage, qui va alimenter en pression le circuit de gavage G ainsi que les chambres 51 et 52 du vérin 5.

La chambre 52 est alimentée en pression par la pompe de gavage 2 en fonction de l'action de la commande 22 sur le réducteur de pression proportionnel 21.

La chambre 51 est alimentée en pression par la pompe de gavage 2 en fonction des débits définis par les limiteurs de débit 11 et 12, et la pression intermédiaire qu'ils définissent.

L'établissement de la pression par la pompe de gavage 2 n'est pas instantané ; la pression s'établit progressivement dans les lignes alimentant les chambres 51 et 52 du vérin 5.

Le débit venant de la pompe de gavage 2 qui s'établit entre 11 et 12 définit une pression intermédiaire. Cette pression intermédiaire est appliquée à la première chambre 51 du vérin 5. Une variation de pression à l'entrée de la restriction 11 va faire évoluer les débits à travers des restrictions 11 et 12 de manière progressive jusqu'à arriver à un nouvel équilibre dynamique, qui va définir une nouvelle pression entre les restrictions 11 et 12. Si le débit est nul, la pression est celle du réservoir R.

Par conséquent, lors du démarrage de la pompe hydraulique 1, les deux chambres 51 et 52 du vérin 5 sont à pression ambiante pendant une durée donnée, durant laquelle le vérin 5 est en position d'équilibre et la cylindrée de la pompe hydraulique 1 est nulle. Le couple à fournir lors du démarrage du moteur thermique M pour entrainer la pompe hydraulique 1 est donc nul ou sensiblement nul.

Une fois que la pompe de gavage 2 a établi la pression dans les chambres 51 et 52 du vérin 5, l'inclinaison du plateau 4 de la pompe hydraulique 1 est modifiée, ce qui met en cylindrée la pompe hydraulique 1.

A titre d'exemple, en considérant que le moteur thermique M démarre en sensiblement 2 secondes suite à une instruction de démarrage d'un utilisateur, le temps nécessaire pour que la pompe de gavage 2 établisse la pression de gavage peut être choisi pour être également sensiblement égal à 2 secondes, la pompe hydraulique 1 reste donc à cylindrée nulle pendant sensiblement 4 secondes à partir de la commande de démarrage. De cette manière, le démarrage du moteur thermique M est facilité. Ce temps peut être ajusté par le choix du dimensionnement des restrictions 11 et 12.

La figure 3 illustre une variante du circuit illustré sur la figure 2, comprenant en outre une restriction 14 (communément appelée « gicleur ») disposée entre le réducteur de pression proportionnel 21 et la seconde chambre 52 du vérin 5.

Dans cette variante, la restriction 14 permet d'amortir le débit entrant et sortant dans la seconde chambre 52 du vérin 5, afin d'éviter une remise en cylindrée trop brusque de la pompe hydraulique 1.

Les circuits tels que décrits précédemment trouvent une application particulière pour le pilotage de ventilateurs réalisant le refroidissement d'un radiateur de moteur thermique.

A titre d'exemple, on peut citer les véhicules tels que les camions, bus ou véhicules de transport urbain, machines de travaux publics, agricoles, ou de manutention qui comprennent un moteur thermique et un radiateur nécessitant un refroidissement.

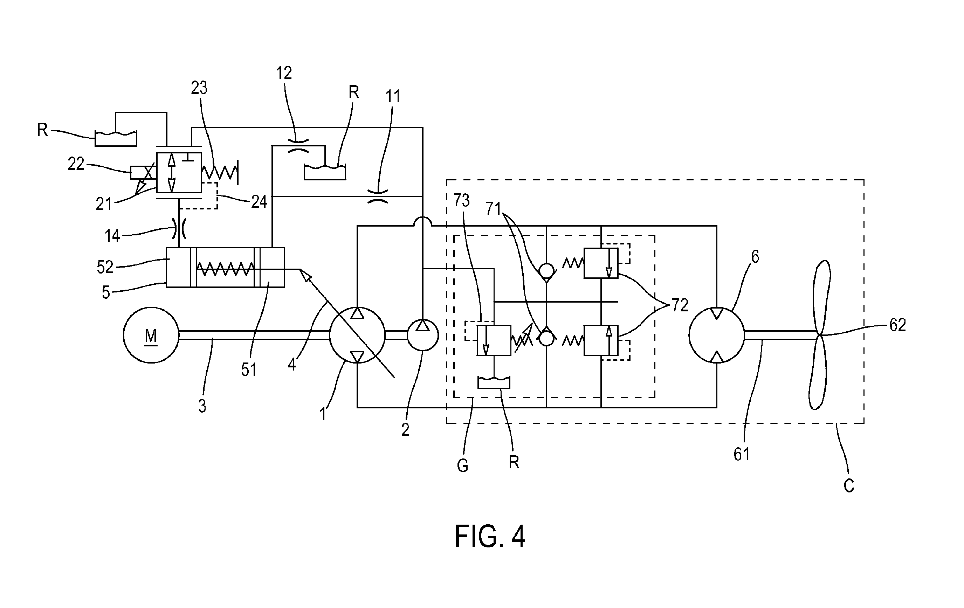

La figure 4 illustre un exemple d'application du circuit présenté sur les figures 1 et 2 appliqué au pilotage d'un tel ventilateur de refroidissement.

Dans ce mode de réalisation, la pompe hydraulique 1 alimente le circuit hydraulique C comprenant un moteur hydraulique 6, qui entraine un axe 61 en rotation sur lequel est monté un ventilateur 62, typiquement destiné à refroidit un élément tel qu'un radiateur de moteur thermique.

L'inclinaison du plateau came de la pompe hydraulique 1 détermine le sens de circulation du fluide dans le circuit hydraulique C, et donc le sens de rotation du ventilateur 62.

On définit ainsi une branche haute pression HP du circuit hydraulique C qui est la branche du circuit C en amont du moteur hydraulique 6, et une branche basse pression BP du circuit hydraulique C qui est la branche du circuit C en aval du moteur hydraulique 6.

Tel que représenté, le circuit de gavage G comprend des moyens anti retour 71 assurant le gavage du circuit hydraulique C en cas de pression insuffisante, et des limiteurs de pression 72 assurant l'évacuation de fluide en cas de surpression dans le circuit hydraulique C. Le circuit de gavage G comprend en outre un limiteur de pression 73 permettant d'évacuer du fluide vers un réservoir R à pression ambiante ou atmosphérique lorsque la pression de gavage dépasse la valeur souhaitée.

En cas de défaillance de la commande 22 du réducteur de pression proportionnel 21 pilotant la pression dans la seconde chambre 52 du vérin 5, le réducteur de pression proportionnel 21 est ramené vers sa position initiale par le moyen de rappel élastique 23 et la ligne de recopie 24, de sorte que la pression au sein de la seconde chambre 52 du vérin 5 diminue. Seule la première chambre 51 du vérin 5 est alors alimentée en pression par la pompe de gavage 2, ce qui entraine une augmentation de la cylindrée de la pompe hydraulique 1, et donc l'entrainement du moteur hydraulique 6 et du ventilateur 62.

Le circuit de pilotage tel que proposé permet donc d'assurer le fonctionnement du ventilateur 62 en cas de défaillance de la commande 62, la pompe hydraulique 1 étant alors avantageusement à cylindrée maximale pour entrainer le moteur hydraulique 6 qui entraine en rotation le ventilateur 62.

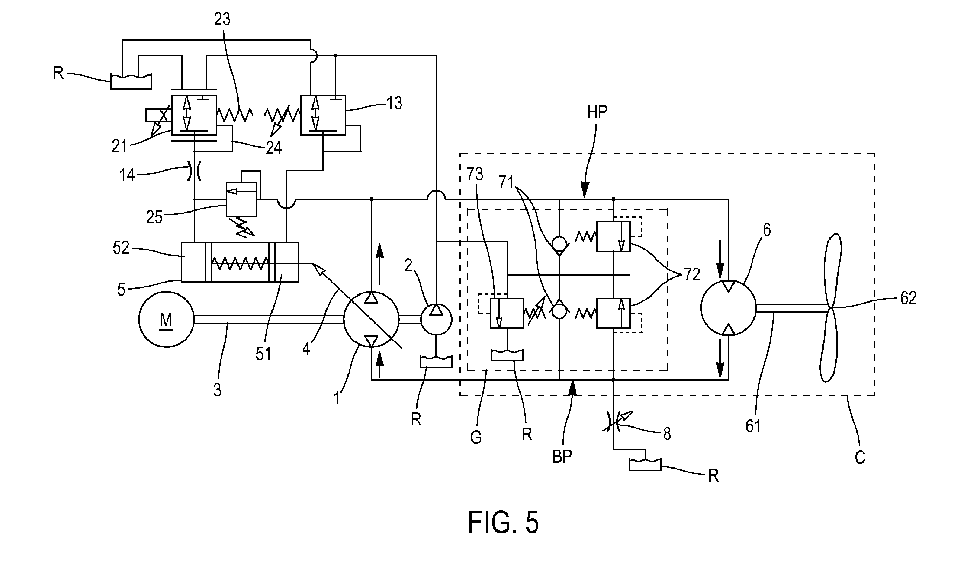

La figure 5 illustre une variante du circuit présenté précédemment sur la figure 4.

Cette figure illustre notamment le réservoir R dans lequel la pompe de gavage 2 prélève du fluide hydraulique afin de l'injecter dans le circuit hydraulique C.

A titre d'exemple, on a représenté sur cette figure le sens de circulation du fluide hydraulique dans le circuit hydraulique C par des flèches en sortie et en entrée de la pompe hydraulique 1 et du moteur hydraulique 6. On définit ainsi une branche haute pression HP du circuit hydraulique C, et une branche basse pression BP du circuit hydraulique C.

La branche haute pression HP correspond à la branche du circuit hydraulique C en amont du moteur hydraulique 6, tandis que la branche basse pression BP correspond à la branche du circuit hydraulique C en aval du moteur hydraulique 6.

On comprend aisément qu'en cas de changement du sens de circulation du fluide dans le circuit hydraulique du fait du pilotage du plateau de la pompe hydraulique 1, les branches HP et BP sont inversées.

Dans le circuit illustré sur la figure 5, la première chambre 51 du vérin 5 est reliée à la pompe de gavage 2 via un réducteur de pression 13 définissant une pression constante. Selon un mode de réalisation particulier, ledit réducteur de pression 13 peut être associé à une ou plusieurs restrictions comme présenté précédemment sur la figure 2.

La seconde chambre 52 du vérin 5 est quant à elle reliée à la pompe de gavage 2 vis un réducteur de pression proportionnel 21 muni d'une commande 22 et permettant d'appliquer une pression variable dans ladite seconde chambre 52 du vérin 5. Dans le mode de réalisation représenté, ce réducteur de pression proportionnel 21 est monté en série avec une restriction ou gicleur 14.

La pression dans les chambres 51 et 52 du vérin 5 est déterminée en fonction de la commande et/ou du tarage des réducteurs de pression 13 et 21.

Dans le mode de réalisation représenté, la seconde chambre 52 du vérin 5 est également reliée au circuit hydraulique C, par exemple au niveau de la sortie de la pompe hydraulique 1 via un limiteur de pression 25 muni de moyens de tarage pouvant être pilotés.

Ce limiteur de pression 25 permet de réaliser une protection du circuit hydraulique C, et plus précisément une protection de la pompe hydraulique 1. En effet, dans le cas où la pression dans la branche haute pression HP du circuit hydraulique C dépasse la valeur de tarage du limiteur de pression 25, ce limiteur de pression 25 achemine du débit dans la branche entre la restriction ou gicleur 14 et la seconde chambre 52.Le débit crée une perte de charge en traversant le gicleur 14, créant ainsi une pression dans la seconde chambre 52, ce qui diminue l'inclinaison du plateau 4

L'inclinaison du plateau 4 de la pompe 1, et donc la cylindrée de la pompe hydraulique 1 est ainsi réduite, ce qui permet d'éviter une surcharge de la pompe hydraulique 1 ou plus généralement du circuit hydraulique C. Contrairement aux solutions antérieures qui consistent à réaliser une fuite ou des pertes dans le circuit hydraulique afin d'y limiter la pression, le circuit proposé permet ainsi d'obtenir un rendement maximum de la pompe hydraulique 1.

Dans ce mode de réalisation particulier, c'est donc la combinaison du pilotage du réducteur de pression proportionnel 23 et du limiteur de pression 25 qui détermine la pression au sein de la seconde chambre 52 du vérin 5.

Tel que représenté sur la figure 5, la pression est prélevée au niveau de la branche haute pression HP du circuit hydraulique C. On comprendra aisément que la pression peut également être prélevée au niveau de la branche basse pression BP du circuit hydraulique C, ou que l'on peut réaliser un prélèvement sélectif dans l'une ou l'autre de ces branches par exemple à l'aide d'un clapet navette.

Le mode de réalisation représenté sur la figure 5 comprend par ailleurs une ligne d'échange, qui prélève du fluide hydraulique sur la branche basse pression BP au moyen d'un limiteur de débit compensé en pression 8 qui permet d'obtenir un débit sensiblement constant quelle que soit la pression à ses bornes, et l'envoie vers un réservoir R.

La pompe de gavage 2 assure le remplacement de ce fluide qui est prélevé du circuit hydraulique.

On peut ainsi prélever du fluide hydraulique ayant une température élevée du fait de sa circulation dans le circuit hydraulique C, et y réinjecter du fluide hydraulique à température ambiante, ce qui permet de prévenir les risques de surchauffe du circuit.

On comprendra bien que dans le cas où le sens de circulation du fluide hydraulique dans le circuit C est inversé, l'échange se produit de manière similaire car le limiteur de débit compensé en pression est apte à échanger sur une branche HP de la même manière que sur la branche basse pression BP.

Le limiteur de débit compensé pourrait être placé aussi bien sur chacune des deux branches haute pression HP ou basse pression BP, cependant, pour un meilleur rendement, il est avantageux de le placer sur la branche qui sera la branche basse pression BP en fonctionnement habituel.

Ce système d'échange est simplifié par rapport à une valve d'échange usuelle, plus compliquée et coûteuse, reliée à la fois aux lignes haute pression HP et basse pression BP et qui sélectionne la ligne basse pression BP (par exemple au moyen d'un tiroir de sélection) pour effectuer l'échange.

L'invention telle que décrite précédemment présente ainsi plusieurs avantages.

Le démarrage du moteur thermique M est réalisé avec la pompe hydraulique ayant une cylindrée nulle, ce qui facilite donc fortement son démarrage en réduisant le couple qu'il doit fournir. La mise en cylindrée de la pompe 1 intervient quelques secondes après le démarrage du moteur thermique, par exemple afin d'en assurer le refroidissement dans le cas où la pompe 1 permet l'entrainement d'un ventilateur de circuit de refroidissement. Dans cette application particulière, on comprend bien que l'entrainement du ventilateur dès le démarrage du moteur n'est pas impératif, dans la mesure où l'élévation de température dans le circuit à refroidir s'établit progressivement.

Le circuit de pilotage de la cylindrée de la pompe hydraulique 1 permet de plus de réaliser une fonction de sécurité en cas de défaillance de la commande 22, en assurant une ventilation maximale du fait de la cylindrée maximale de la pompe hydraulique 1 qui en découle.

Le pilotage de la cylindrée de la pompe hydraulique 1 n'entraine pas de perte de puissance, car au lieu de piloter une fuite sur la sortie de puissance de la pompe en boucle ouverte, on fait un prélèvement minime sur le débit de gavage, et non sur la pompe d'entrainement. Le rendement hydraulique et mécanique est donc supérieur.

## Revendications

1. Circuit hydraulique comprenant :
- une pompe (1) à cylindrée variable, alimentant en fluide ledit circuit,
- une pompe de gavage (2),
- une commande de pompe (5) pilotant la cylindrée de ladite pompe (1) à cylindrée variable, alimentée par la pompe de gavage (2) via des moyens de contrôle de pression (11, 12, 21, 25),
ledit circuit étant **caractérisé en ce que** ladite commande de pompe (5) comprend un vérin (5) double effet comprenant une première chambre (51) et une seconde (52) chambre, dans lequel
- la première chambre (51) est reliée à ladite pompe de gavage (2) via une première ligne de tarage comprenant des moyens réducteurs de pression (11, 12, 13),
- la seconde chambre (52) est reliée à ladite pompe de gavage (2) via une seconde ligne de tarage comprenant un réducteur de pression (21) proportionnel,
de sorte que le pilotage du réducteur de pression (21) proportionnel pilote la cylindrée de la pompe (1) à cylindrée variable.

2. Circuit hydraulique selon la revendication précédente, dans lequel lesdits moyens réducteurs de pression (11, 12) comprennent deux restrictions (11, 12) montées en série, définissant une pression intermédiaire qui alimente ladite première chambre (51).

3. Circuit hydraulique selon l'une des revendications précédentes, dans lequel ledit réducteur de pression (21) proportionnel comprend une commande (22) de tarage électrique.

4. Circuit hydraulique selon l'une des revendications précédentes, dans lequel une restriction (14) est disposée entre le réducteur de pression (21) proportionnel et la seconde chambre (52) du vérin (5).

5. Circuit hydraulique selon l'une des revendications précédentes, dans lequel la seconde chambre (52) du vérin (5) est reliée à la pompe hydraulique (1) via un limiteur de pression (25), de sorte que la pression au sein de ladite seconde chambre (52) résulte du pilotage du réducteur de pression (21) proportionnel et de la perte de charge créée par le débit traversant le limiteur de pression (25) à travers la perte de charge (14).

6. Circuit hydraulique selon la revendication précédente, dans lequel ledit limiteur de pression est adapté pour prélever du fluide dans une branche haute pression dudit circuit et l'acheminer vers la seconde chambre du vérin lorsque la pression dans ladite branche haute pression du circuit est supérieure ou égale à une valeur définie.

7. Circuit hydraulique selon l'une des revendications précédentes, dans lequel la pompe (1) à cylindrée variable alimente un moteur (6) pour l'entrainement d'un ventilateur (62) d'un circuit de refroidissement.

8. Circuit hydraulique selon l'une des revendications précédentes, dans lequel la pompe (1) à cylindrée variable est une pompe à pistons axiaux, et la cylindrée variable est pilotée par l'inclinaison d'un plateau (4) came rotatif.

9. Circuit hydraulique selon l'une des revendications précédentes, dans lequel le circuit est muni d'un réducteur de débit (8) adapté pour réaliser une fuite de fluide hydraulique en prélevant du fluide hydraulique dans une branche dudit circuit, la pompe de gavage (2) étant configurée pour injecter du fluide hydraulique dans le circuit afin de compenser ladite fuite.
